(19) **Europäisches Patentamt**

**European Patent Office**

**Office européen des brevets**

(11) **EP 0 841 342 B1**

(12) **EUROPÄISCHE PATENTSCHRIFT**

(45) Veröffentlichungstag und Bekanntmachung des Hinweises auf die Patenterteilung:
**28.11.2001 Patentblatt 2001/48**

(51) Int Cl.$^7$: **C07F 7/12**, C07F 7/14

(21) Anmeldenummer: **97116213.6**

(22) Anmeldetag: **18.09.1997**

(54) **Verfahren zur Herstellung von Vinyltrichlorsilan**

Process for the preparation of vinyl-trichlorosilane

Procédé de préparation de vinyl-trichlorosilane

(84) Benannte Vertragsstaaten:
**BE DE ES FR GB IT NL**

(30) Priorität: **06.11.1996 DE 19645700**
**28.06.1997 DE 19727576**

(43) Veröffentlichungstag der Anmeldung:
**13.05.1998 Patentblatt 1998/20**

(73) Patentinhaber:
• **Degussa AG**
**40474 Düsseldorf (DE)**
Benannte Vertragsstaaten:
**DE ES GB IT**
• **Fiolitakis, Emmanuel**
**48249 Dülmen (DE)**
Benannte Vertragsstaaten:
**BE FR NL**

(72) Erfinder: **Fiolitakis, Emmanuel, Dr.**
**48249 Dülmen (DE)**

(56) Entgegenhaltungen:
**EP-A- 0 438 666**    **EP-A- 0 456 901**

**Beschreibung**

Die vorliegende Erfindung betrifft ein Verfahren zur kontinuierlichen Herstellung von Vinyltrichlorsilan durch Umsetzung von Vinylchlorid und Trichlorsilan, auch Silicochloroform genannt.

Vinyltrichlorsilan ist eine wichtige Ausgangsverbindung für die Herstellung einer Reihe wertvoller funktionalisierter Organosilane. Zum Beispiel werden hieraus Vinylalkoxysilane hergestellt, die ihrerseits u. a. für die Silanbeschichtung von Polyethylen verwendet werden.

In den Patentschriften EP 0 438 666 B1 und EP 0 456 901 B1 werden die Prinzipien für die Konstruktion und den Betrieb von Ringspaltreaktoren mit darin axialsymmetrisch angeordneten rotierenden Verdrängerkörpern beschrieben. In solchen Reaktoren kann Vinyltrichlorsilan großtechnisch durch Umsetzung von Trichlorsilan und Vinylchlorid bei erhöhter Temperatur hergestellt werden, entsprechend dem Formelschema

$$CH_2=CHCl + HSiCl_3 \rightarrow CH_2=CH\text{-}SiCl_3 + HCl$$

Dabei hat sich ein erheblicher Überschuß an Trichlorsilan (Gewichtsverhältnis von Vinylchlorid zu Trichlorsilan 1 : 4 bis 1 : 6, entsprechend etwa der zwei- bis dreifachen stöchiometrischen Menge Vinylchlorid) als günstig erwiesen. Das Verfahren liefert jedoch Vinyltrichlorsilan selbst dann nur mit einer Selektivität von etwa 0,7, bezogen auf umgesetztes Vinylchlorid. Neben dem gewünschten Vinyltrichlorsilan erhält man in wechselnden Mengen Tetrachlorsilan und Ethyltrichlorsilan sowie verschiedene andere Hoch- oder Leichtsieder. In den Ringspaltöfen werden die Edukte innerhalb einer kurzen Vorheizstrecke schnell auf Reaktionstemperatur erhitzt, was eine bessere Nutzung des Reaktionsraumes und eine fast adiabatische Reaktion ermöglicht. Diese Fahrweise begünstigt jedoch spontane Zersetzungsreaktionen unter Abscheidung von Silicium und Kohlenstoff in Form von Ruß. Sie ist daher störanfällig und nicht in einfacher Weise betriebssicher zu regeln.

Der vorliegenden Erfindung lag die Aufgabe zugrunde, ein wirtschaftliches Verfahren zur Herstellung von Vinyltrichlorsilan durch Umsetzung von Vinylchlorid mit Trichlorsilan bereitzustellen, das bessere Ausbeuten ergibt, in einfacher Weise zu regeln, betriebssicher und nicht störanfällig ist.

Als Lösung dieser Aufgabe wurde überraschenderweise gefunden, daß sich Vinyltrichlorsilan durch Umsetzung von Vinylchlorid mit Trichlorsilan bei erhöhter Temperatur vorteilhaft herstellen läßt, wenn man die Umsetzung bei 400 bis 850 °C in einer Wirbelschicht durchführt.

Das Verfahren nach der Erfindung liefert Vinyltrichlorsilan bei Umsatzgraden, bezogen auf Vinylchlorid, von bis zu etwa 0,5 mit Selektivitäten, die überraschenderweise besser sind als bei dem bekannten Verfahren in Ringspaltreaktoren, nämlich bis zu etwa 0,9 betragen. Man hätte erwarten sollen, daß die Arbeitsweise in einer Wirbelschicht wegen der im Vergleich zu Ringspaltöfen stärkeren Rückvermischung zu vermehrter Bildung von höhersiedenden Oligomeren des Vinyltrichlorsilans und damit zu einer geringeren Selektivität führen würde. Diese verbesserte Selektivität bei guten Raum-Zeit-Ausbeuten wird zudem mit einem geringeren Überschuß an Trichlorsilan erzielt, als ihn das Verfahren in Ringspaltöfen benötigt. Das Verfahren nach der Erfindung läßt sich im stationären Zustand auch über längere Zeiträume praktisch ohne regelnde Eingriffe störungsfrei betreiben. Die lästige Abscheidung von Kohlenstoff in Form von Ruß sowie von Silicium wird praktisch vollständig unterdrückt.

Für das Verfahren eignen sich technisch reines Vinylchlorid mit einer Reinheit vom 99,95 bis 99,99 %, wie es durch Dehydrohalogenierung von 1,2-Dichlorethan großtechnisch gewonnen wird, sowie Trichlorsilan mit einer Reinheit von 96,0 bis 99,0 % das aus Silicium und Chlor oder Chlorwasserstoff hergestellt wird und u. a. geringe Mengen an Dichlor- und Tetrachlorsilan enthält. Man kann die beiden Ausgangsstoffe in stöchiometrischen Mengen oder mit einem Überschuß an Trichlorsilan, z. B. bis zur dreifachen molaren Menge (entsprechend etwa der 6fachen Gewichtsmenge) einsetzen.

Die Reaktionstemperatur in der Wirbelschicht beträgt zweckmäßig 550 bis 800 °C, und man arbeitet in der Regel unter Atmosphärendruck. Die mittlere Verweilzeit, d. h. die Zeit, innerhalb derer der Stoffstrom durchschnittlich in der Wirbelschicht verbleibt, hängt im wesentlichen von der Temperatur in der Wirbelschicht, aber auch von einer Reihe anderer Verfahrensparameter ab und beträgt im allgemeinen 0,1 bis 0,2 Sekunden. Das Verfahren nach der Erfindung zeichnet sich dementsprechend durch hohe Raum-Zeit-Ausbeuten aus. Die optimale Verweilzeit für anderweitig gegebenen Verfahrensbedingungen läßt sich durch orientierende Versuche unschwer ermitteln.

Als Wirbelgut für die Wirbelschicht eignen sich beliebige anorganische, teilchenförmige Stoffe von geeigneter Korngröße, die unter den Verfahrensbedingungen fest und gegenüber Ausgangsstoffen und Vinyltrichlorsilan inert sind. Von den geeigneten Stoffen seien beispielsweise Siliciumnitrid und insbesondere Siliciumcarbid genannt. Das Wirbelgut hat zweckmäßig eine Korngrößenverteilung von 80 bis 800 μm, vorteilhaft von 200 bis 800 μm, und einen mittleren Teilchendurchmesser von 400 bis 600 μm, vorteilhaft von 450 bis 550 μm. Das Wirbelgut liegt im Ruhezustand im allgemeinen in einer Schichtdicke vor, die ja nach der Kapazität der Anlage wenige cm bis zu 30 cm beträgt.

Die optimalen Korngrößen des Wirbelguts hängen von der Reaktorgeometrie und von der Reaktorbeschik-

kung, also dem Durchsatz ab. In der folgenden graphischen Darstellung sind die errechneten Grenzen für die Korngrößenverteilung einer Wirbelschicht in Abhängigkeit von der Gas-Leerrohrgeschwindigkeit angegeben. Die linke Kurve entspricht der Grenze zwischen den Feingutteilchen, die unter Reaktionsbedingungen bei der betreffenden Gas-Leerrohrgeschwindigkeit aus der Wirbelschicht ausgetragen werden bzw. in ihr verbleiben. Die rechte Kurve entspricht der Grenze zwischen den Grobgutteilchen, die bei der betreffenden Gas-Leerrohrgeschwindigkeit noch wirbeln bzw. nicht mehr aufgelockert werden.

**Grenzen der Korngrößenverteilung des Wirbelguts in der Wirbelschicht in Abhängigkeit von der Gas-Leerrohrgeschwindigkeit**

Gas-Leerrohrgeschwindigkeit (m/s)

Korngröße (µm)

Lockerungsgrenze

Austragungsgrenze

Vorteilhaft werden die Ausgangsstoffe, die bei Raumtemperatur und Atmosphärendruck gasförmig sind (Vinylchlorid) bzw. bei 31,8 °C sieden (Trichlorsilan), dampfförmig von unten in die erhitzte Wirbelschicht eingeleitet. Die Höhe einer gut gewirbelten Schicht beträgt im allgemeinen etwa das 3- bis 8fache der Höhe der Schicht im Ruhezustand. Die Menge des zugeführten dampfförmigen Ausgangsgemisches reicht unter Umständen nicht aus, um das Bett gut durchzuwirbeln. Man leitet daher zweckmäßig ein Inertgas, wie Stickstoff, zusammen mit den dampfförmigen Ausgangsstoffen oder getrennt davon und gegebenenfalls vorgeheizt, von unten in die Wirbelschicht ein. Die optimalen Inertgasmengen lassen sich wiederum durch Vorversuche unschwer ermitteln und betragen im allgemeinen 0,4 bis 1,2 mol/mol Vinylchlorid.

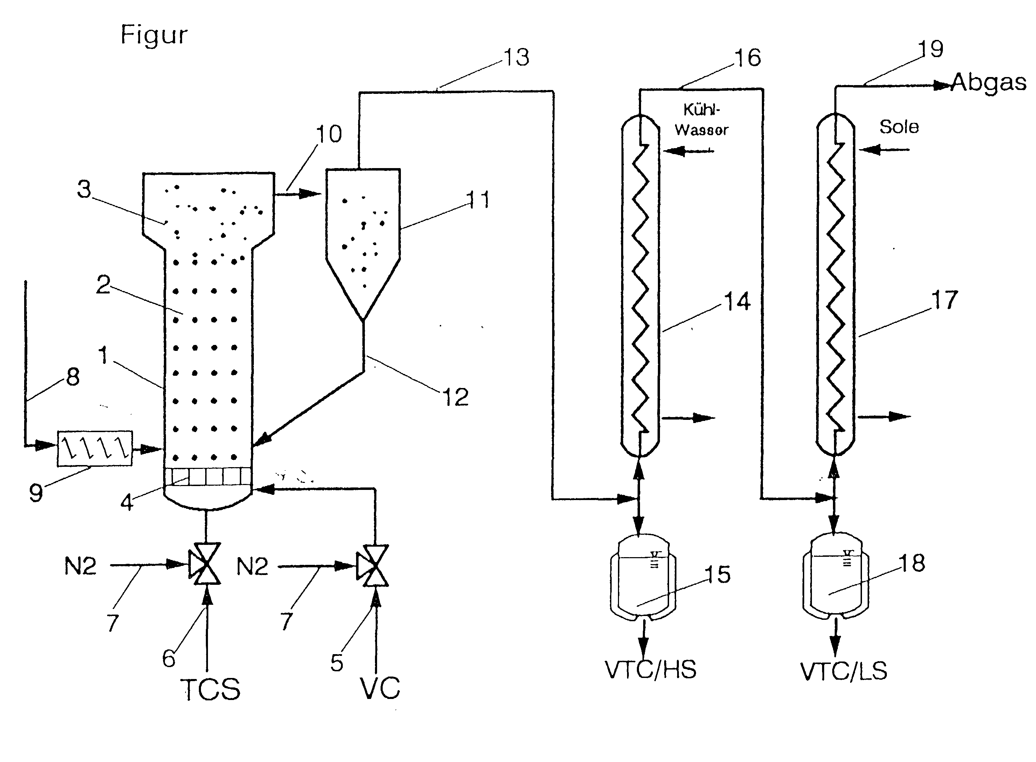

Eine Anlage zur Durchführung des Verfahrens nach der Erfindung ist in der beigefügten Figur schematisch dargestellt. Der Reaktor **1** ist ein senkrecht stehendes Gefäß von zylindrischem Querschnitt, das im oberen Teil eine Erweiterung aufweist, um den Grobgutanteil **2** des Wirbelguts von dessen Feingutanteilen **3** abzutrennen. Durch die Erweiterung werden die Strömungsgeschwindigkeit des gasförmigen Reaktionsgemisches und dementsprechend die Menge der mitgeführten Wirbelgutteilchen herabgesetzt. Die ruhende Schicht der Wirbelgutteilchen wird von einer Siebplatte oder einem Drahtnetz **4** am unteren Ende des Reaktors **1** getragen, deren Porenweite bzw. dessen Maschenweite kleiner als der mittlere Durchmesser der Wirbelgutteilchen und vorteilhaft kleiner als die kleinsten Wirbelgutteilchen ist. Der Reaktor wird zweckmäßig durch elektrische Heizspiralen beheizt und enthält die üblichen Vorrichtungen zur Regelung der Temperatur. Die Ausgangsstoffe, Vinylchlorid **5** und Trichlorsilan **6,** werden dem Reaktor **1** dampfförmig, gegebenenfalls im Gemisch mit Stickstoff **7,** unterhalb der Siebplatte oder des Drahtnetzes **4** zugeführt. Zum Ausgleich des ausgetragenen Wirbelguts werden frische Anteile **8** über eine mechanische Förderung **9** oder pneumatisch mittels eines mit Wirbelgut beladenen Inertgasstromes (nicht dargestellt) in die Wirbelschicht eingeführt.

Der aus dem oberen Teil des Reaktors **1** austretende Stoffstrom **10** aus gasförmigem Rohprodukt und mitgeführtem Wirbelgut wird in den Zyklon **11** geleitet, in dem der größte Teil des mitgeführten Wirbelguts von dem gasförmigen Rohprodukt abgetrennt wird. Das abgeschiedene Wirbelgut wird über die Rückführungsleitung **12** in den Reaktor **1** kurz oberhalb der Siebplatte oder des Drahtnetzes **4** zurückgeführt. Das gasförmige Rohprodukt in der Leitung **13** enthält gegebenenfalls noch staubförmige Feststoffanteile und wird in dem wassergekühlten Kühler **14** in eine Hochsiederfraktion **15,** die den Hauptanteil des Vinyltrichlorsilans und der anderen Hochsieder sowie die staubförmigen Feststoffanteile enthält, sowie einen abgemagerten Produktstrom **16** zerlegt, der in den Sole-gekühlten Kühler **17** geführt wird. Dort wird eine Leichtsiederfraktion **18** flüssig abgeschieden, die überwiegend aus nicht umgesetzten Ausgangsstoffen sowie einem kleineren Teil an Vinyltrichlorsilan besteht. Das Restgas **19** kann nach Abtrennung des Chlorwasserstoffs, z. B. durch eine übliche Wasserwäsche, als Abgas ausgeschleust werden.

Zur Verbesserung des Umsatzgrades bei gleichbleibend hoher Selektivität kann das Verfahren nach der Erfindung auch in einer Kaskade aus zwei oder mehr hintereinander geschalteten Wirbelschichten durchgeführt werden.

Das folgende Beispiel soll das Verfahren nach der Erfindung weiter erläutern, deren Anwendungsbereich jedoch in keiner Weise einschränken.

Beispiel 1

In einer Laboranlage, die im wesentlichen der Figur entspricht, werden Vinylchlorid und Trichlorsilan in den in Tabelle 1 angegebenen Durchsatzmengen zu Vinyltrichlorsilan umgesetzt. Der Reaktor **1** besteht aus einem Rohr aus Edelstahl 1.4571 von 30 cm Länge mit 16 mm Innendurchmesser und 2,6 mm Wandstärke. Der Reaktor **1** wird von außen elektrisch beheizt. Ein diffusorähnlicher Gaseinleitungsstutzen im unteren Teil des Reaktors **1** (nicht dargestellt) sorgt bei hinreichendem Stoffdurchsatz für eine gute Durchmischung der Ausgangsstoffe Vinylchlorid **5** und Trichlorsilan **6** vor deren Eintritt durch das Edelstahlnetz **4** in die Wirbelschicht **2.** Die in der Tabelle **1** angegebenen Mengen Stickstoff **7** werden gemeinsam mit dem Trichlorsilan **6** in den Reaktor **1** eingeführt. Der Gaseinleitungsstutzen wird mit Luft gekühlt, um sicherzustellen, daß die Ausgangsstoffe erst nach dem Eintritt in die Wirbelschicht auf Reaktionstemperaturen erhitzt werden, und um einer Verstopfung des Edelstahlnetzes **4** vorzubeugen.

Als Wirbelgut wird Siliciumcarbid mit Korngrößen von 400 bis 500 μm bzw. 500 bis 630 μm verwendet. Die mittleren Korndurchmesser betragen dementsprechend 450 bzw. 565 μm. Das Edelstahlnetz **4** hat eine Maschenweite von 300 μm. Die Höhe der ruhenden Wirbelgutschicht beträgt 4 bzw. 8 cm, wie in Tabelle 1 angegeben. Das gasförmige Rohprodukt in der Leitung **13** wird mit Luft gekühlt, damit es schnell abgekühlt wird und Folgereaktionen unterdrückt werden.

In den Versuchen wurden der Durchsatz der Ausgangsstoffe, das Verhältnis von Stickstoff zu Ausgangsstoffen, die Temperatur, die Schichthöhe des ruhenden Wirbelguts und die Kornfraktion variiert, wie aus Tabelle 1 ersichtlich. Die Zusammensetzung der Produktionsströme wurde durch gaschromatographische Analyse bestimmt. Die erzielten Umsatzgrade und Selektivitäten sind in Tabelle 2 zusammengestellt.

Die in den Tabellen und in der Figur verwendeten Bezeichnungen haben die folgenden Bedeutungen:

$d_p$      mittlerer Durchmesser des Kornguts
$H^\circ$      Schichthöhe des ruhenden Wirbelguts
VC      Vinylchlorid
TCS      Trichlorsilan
$N_2$      Stickstoff
VTC      Vinyltrichlorsilan

TET    Tetrachlorsilan
UK1    unbekannte Komponente 1
UK2    unbekannte Komponente 2
ETCS   Ethyltrichlorsilan
HS     Hochsieder
LS     Leichtsieder

Tabelle 1

| Vers. Nr. | $d_p$ µm | H° cm | Temp. °C | Zulaufstrom mol/h | | | Produktstrom mol/h | | | | | |
|---|---|---|---|---|---|---|---|---|---|---|---|---|
| | | | | VC | TCS | $N_2$ | VTC | TET | UK1 | HS | UK2 | ETCS |
| 1 | 450 | 4 | 720 | 2,40 | 2,40 | 2,00 | 0,858 | 0,109 | 0,072 | 0,006 | 0,008 | 0,002 |
| 2 | 450 | 4 | 700 | 3,45 | 3,45 | 1,60 | 0,556 | 0,049 | 0,010 | 0,006 | 0,003 | 0,008 |
| 3 | 450 | 4 | 725 | 3,60 | 3,60 | 1,60 | 1,163 | 0,102 | 0,073 | 0,006 | 0,008 | 0,040 |
| 4 | 450 | 4 | 730 | 4,80 | 4,80 | 2,40 | 1,690 | 0,162 | 0,132 | 0,019 | 0,011 | 0,015 |
| 5 | 450 | 4 | 715 | 4,60 | 4,70 | 2,40 | 1,642 | 0,141 | 0,085 | 0,011 | 0,016 | 0,034 |
| 6 | 450 | 4 | 740 | 4,80 | 4,80 | 2,50 | 2,120 | 0,259 | 0,362 | 0,021 | 0,026 | 0,013 |
| 7 | 450 | 4 | 775 | 4,80 | 4,80 | 0,85 | 1,566 | 0,173 | 0,295 | 0,026 | 0,024 | 0,001 |
| 8 | 565 | 8 | 720 | 2,40 | 2,40 | 2,30 | 1,144 | 0,132 | 0,121 | 0,006 | 0,010 | 0,013 |
| 9 | 565 | 8 | 650 | 2,40 | 2,40 | 2,70 | 0,398 | 0,031 | 0,012 | 0,006 | 0,005 | 0,029 |

EP 0 841 342 B1

Tabelle 2

| Vers. Nr. | Umsatzgrad, bez. auf VC, ausgen. für TET, bez. auf TCS | | | | | | Selektivität von VTC, bez. auf VC |
|---|---|---|---|---|---|---|---|
| | VTC | TET | UK1 | HS | UK2 | ETCS | |
| 1 | 0,358 | 0,045 | 0,030 | 0,003 | 0,003 | 0,001 | 0,814 |
| 2 | 0,161 | 0,014 | 0,003 | 0,002 | 0,001 | 0,002 | 0,880 |
| 3 | 0,323 | 0,028 | 0,020 | 0,002 | 0,002 | 0,011 | 0,837 |
| 4 | 0,352 | 0,034 | 0,028 | 0,004 | 0,002 | 0,003 | 0,832 |
| 5 | 0,357 | 0,030 | 0,018 | 0,002 | 0,003 | 0,007 | 0,856 |
| 6 | 0,442 | 0,054 | 0,075 | 0,004 | 0,005 | 0,003 | 0,758 |
| 7 | 0,326 | 0,036 | 0,061 | 0,005 | 0,004 | 0,001 | 0,754 |
| 8 | 0,477 | 0,055 | 0,050 | 0,003 | 0,004 | 0,005 | 0,803 |
| 9 | 0,166 | 0,013 | 0,005 | 0,003 | 0,002 | 0,012 | 0,826 |

Beispiel 2

Vinyltrichlorsilan wird im technischen Maßstab in einem Wirbelschichtreaktor mit einem Durchmesser von 0,60 m durchgeführt. Die Höhe des ruhenden Wirbelguts beträgt 0,30 m.

Der Reaktor wird mit VC und TCS im Gewichtsverhältnis von 1 : 3,5 beschickt. Die Temperatur beträgt 700 °C, der Druck 1 bar, die Gas-Leerrohrgeschwindigkeit 0,74 m/s und die Höhe der expandierten Wirbelschicht ca. 2 m. Unter diesen Bedingungen liegt die Korngrößengrenze des Wirbelguts für die Austragung bei 120 µm, diejenige für die Lockerung zur Wirbelschicht bei 400 µm.

Bei einem Umsatz von 50 % und einer Selektivität für VTC von 80 %, bezogen auf VC, beträgt die Kapazität des Reaktors 155 t VTC/Monat.


**Patentansprüche**

1.   Verfahren zur Herstellung von Vinyltrichlorsilan durch Umsetzung von Vinylchlorid und Trichlorsilan bei erhöhter Temperatur,
   **dadurch gekennzeichnet,**
   **daß** man die Umsetzung bei 400 bis 850 °C in einer Wirbelschicht durchführt.

2.   Verfahren nach Anspruch 1,
   **dadurch gekennzeichnet,**
   **daß** die Umsetzung bei 550 bis 800 °C durchgeführt wird.

3.   Verfahren nach Anspruch 1 oder 2,
   **dadurch gekennzeichnet,**
   **daß** das Wirbelgut der Wirbelschicht eine Korngrößenverteilung im Bereich von 80 bis 800 µm hat.

4.   Verfahren nach Anspruch 3,
   **dadurch gekennzeichnet,**
   **daß** das Wirbelgut aus Siliziumcarbid besteht.

5.   Verfahren nach einem der Ansprüche 1 bis 4,
   **dadurch gekennzeichnet,**
   **daß** das Gewichtsverhältnis von Vinylchlorid zu Trichlorsilan von 1 : 2 bis 1 : 4 beträgt.

6.   Verfahren nach einem der Ansprüche 1 bis 5,
   **dadurch gekennzeichnet,**
   **daß** zur Förderung der Fluidisierung des Wirbelguts neben den gasförmigen Ausgangsstoffen ein Inertgas in die Wirbelschicht eingeleitet wird.

**7.** Verfahren nach einem der Ansprüche 1 bis 6,
**dadurch gekennzeichnet,**
**daß** die mittlere Verweilzeit in der Wirbelschicht 0,1 bis 0,2 Sekunden beträgt.

**8.** Verfahren nach einem der Ansprüche 1 bis 7,
**dadurch gekennzeichnet,**
**daß** die Umsetzung in einer Kaskade hintereinandergeschalteter Wirbelschichten durchgeführt wird.

**Claims**

**1.** A method of preparing vinyltrichlorosilane by reacting vinyl chloride with trichlorosilane at elevated temperature, **characterized in that** the reaction is carried out at 400-850°C in a fluidized bed.

**2.** A method according to claim 1, **characterized in that** the reaction is carried out at 550-800°C.

**3.** A method according to claim 1 or 2, **characterized in that** the fluidizable material of the fluidized bed has a particle size in the range of 80-800 microns.

**4.** A method according to claim 3, **characterized in that** the fluidizable material is comprised of silicon carbide.

**5.** A method according to any one of claims 1 to 4, **characterized in that** the ratio of vinyl chloride to trichlorosilane is from 1:2 to 1:4 by weight.

**6.** A method according to any one of claims 1 to 5, **characterized in that** an inert gas is introduced to the fluidized bed in addition to the gaseous starting materials in order to promote fluidization of the fluidizable material.

**7.** A method according to any one of claims 1 to 6, **characterized in that** the mean residence time in the fluidized bed is 0.1-0.2 second.

**8.** A method according to any one of claims 1 to 7, **characterized in that** the reaction is carried out in a cascade of successive fluidized beds.

**Revendications**

**1.** Procédé de préparation de vinyltrichlorosilane par réaction du chlorure de vinyle et du trichlorosilane à température accrue,
**caractérisé en ce qu'**
on effectue la réaction de 400 à 850°C dans un lit fluidifié.

**2.** Procédé selon la revendication 1,
**caractérisé en ce qu'**
on effectue la réaction de 550°C à 800°C.

**3.** Procédé selon l'une quelconque des revendications 1 ou 2,
**caractérisé en ce que**
le matériau tourbillonnaire du lit fluidifié a une distribution de tailles de grains dans la plage de 80 à 800 µm.

**4.** Procédé selon la revendication 3,
**caractérisé en ce que**
le produit tourbillonnaire consiste en du carbure de silicium.

**5.** Procédé selon l'une quelconques des revendications 1 à 4,
**caractérisé en ce que**
le rapport en poids du chlorure de vinyle au trichlorosilane est de 1 : 2 à 1 : 4.

6. Procédé selon l'une quelconque des revendications 1 à 5,
   **caractérisé en ce que**
   pour favoriser la fluidification du matériau tourbillonnaire, on introduit à côté des produits de départ gazeux, un gaz inerte dans le lit fluidifié.

7. Procédé selon l'une quelconque des revendications 1 à 6,
   **caractérisé en ce que**
   le temps de séjour moyen dans le lit fluidifié est de 0,1 à 0,2 secondes.

8. Procédé selon l'une quelconque des revendications 1 à 7,
   **caractérisé en ce que**
   la réaction est exécutée dans une cascade de lits fluidifiés montés en série.

Figur

Abgas

Kühl-
Wasser

Sole

N2

N2

TCS

VC

VTC/HS

VTC/LS

EP 0 841 342 B1